# EUROPEAN PATENT SPECIFICATION

(11) **EP 1 638 249 B1**
(45) Date of publication and mention of the grant of the patent: **31.10.2007**
(21) Application number: 05108325.1
(22) Date of filing: 12.09.2005
(51) Int. Cl.: H04L 12/18

(54) **Packet-data-based area group communication**
Paketdaten-basierte Gruppenkommunikation in einem Bereich
Communication de groupe en mode paquet de données dans une aire

(30) Priority: 20.09.2004 FI 20045349
(43) Date of publication of application: 22.03.2006
(73) Proprietor: TeliaSonera Finland Oyj, 00510 Helsinki (FI)
(72) Inventor: Tuomela, Frans, 00640, Helsinki (FI); Jokela, Harri, 00350, HELSINKI (FI)
(74) Representative: Smolander, Jouni Juhani

(56) References cited:
- WO-A-00/30379
- WO-A-03/026205
- WO-A-03/051000
- US-A1- 2004 082 351
- DÜRR F ET AL: "On a Location Model for Fine-Grained Geocast" PROCEEDINGS OF THE INTERNATIONAL CONFERENCE ON UBIQUITOUS COMPUTING, XX, XX, 12 October 2003 (2003-10-12), XP002338360

## Description

### FIELD OF THE INVENTION

The invention relates to telecommunication systems, in particular to implementing packet-data-based area group communication in a telecommunication system.

### BACKGROUND OF THE INVENTION

One special feature in telecommunication systems is group communication. Particularly with regard to voice calls, group communication has been traditionally implemented in trunked mobile networks, such as PMR (Private Mobile Radio) networks that are special mobile networks intended to be used by authorities and companies. Recently, however, solutions have been provided with which a group call can also be implemented in public land mobile networks or other data networks. The term "group" refers, in this context, to any predetermined group comprising two or more users or mobile station subscribers who can participate in the same group communication, typically the same group call. In PMR networks, the mobile subscribers of a given group typically belong to the same organization, whereas in solutions based on public land mobile networks, also private persons can establish talk groups of their own. One mobile subscriber may naturally belong to several groups.

Packet-data-based group communication implementations for both voice and data calls have been recently developed for cellular networks, particularly for GSM/GPRS/UMTS networks. The starting point for such group communication implementations is usually that the mobile system used provides only the required telecommunication connection, such as an IP connection, and the actual implementation of the group communication service has been built as a separate user or application protocol level on top of the telecommunication connection used. Group communication services are typically implemented as VolP (Voice over IP) solutions. In such a case, a group communication application can be implemented as a client-server solution in which the telecommunication network comprises a group communication server, and applications used in terminals function as a client. When such a cellular network solution is used for a radiophone-type "push-to-talk" call, the term PoC network (push-to-talk over cellular network) is generally used.

Such a radiophone-type group call is usually based on a "push-to-talk, release-to-listen" function, in which the group call is set up by pressing a button (tangent) positioned in the terminal and functioning as a call switch. By pressing the button, the user expresses his/her wish to speak, and the terminal sends a service request to the network. The network either rejects the request or allocates the requested resources on the basis of predetermined criteria, such as availability of resources and priority of the requesting user. At the same time, a connection is set up to all other active users in the subscriber group in which the terminal presented the call request. After the speech connection has been established, the requesting user can speak and the rest of the users can listen on the channel. Once the user releases the button, the user terminal signals a release message to the network, and the resources are released, after which the other members of the group can request for a call connection in a similar manner.

Such a radiophone-type group call is an especially usable communication manner in events that are geographically limited, such as festivals, sports events or hunts, because it is easy for the members of a given group participating in the event to keep in touch with all other group members.

A problem with such a PoC network solution is, however, that the members of a PoC group remain active in the group even if they have moved far away from the event area, because a PoC group call connection is established in the whole coverage area of the mobile network. Thus, members having been active in the group remain active also when exiting the event area if they do not remember to disconnect the group call connection separately. Correspondingly, also when a group call is set up, an invitation is sent to all members of a given group, although some of the members may be far away from the event area. Thus, no one participating in a PoC group call can be sure whether the other group members are at a short distance, which may complicate the planned actions of the group.

WO 03/026205 discloses a chat group communications method in which forwarding of a chat message may be dependent on the current geographical position of a recipient device. A chat service center may be arranged to forward the chat message to further participants located within a prespecificable area around the participant sending the chat message.

US 2004/082351 discloses a user group establishment method in which a temporary user group is established via a short range communications links between user terminal devices. The terminal devices may connect an application server, which may connect a presence server for presence information.

WO 03/051000 discloses broadcast arrangement in point-to-point oriented packet-switched networks. The arrangement comprises a multicast/broadcast management center to control multicast/broadcast services. Multicast may be used to send broadcast data to network nodes in a geographical broadcast group specified by the broadcast management center.

### BRIEF DESCRIPTION OF THE INVENTION

An object of the invention is thus to provide a method and an apparatus implementing the method by means of which the activity of members of an IP-based speech communication group can be restricted location-specifically. The object of the invention is achieved with a method, a system, a server and a computer program that are characterized by what is stated in the independent claims. Preferred embodiments of the invention are disclosed in the dependent claims.

The starting point for the invention is a procedure in which an IP-based speech communication group is established in a mobile system comprising several terminals as well as at least one wireless access network and a packet data network, such as a GPRS network, connected to it, for transmitting IP data packets between terminals and at least one server controlling group speech communication. The basic idea of the invention is to set for the speech communication group to be established location-related specifications comprising a predetermined maximum distance from a reference point, set between the group members; and to establish an IP-based speech communication group between at least two of the terminals, the activation of group members requiring location within an activity area determined by the maximum distance.

An advantage of the invention is that establishing a PoC group call connection and keeping it active can be restricted to a given geographical area in such a way that the group members can be active only in the activity area determined in each particular case for the group. In this way it can be made sure that all group members are in the vicinity. If any of the group members exits the determined activity area, he/she will be removed from the PoC group call connection.

An embodiment of the invention comprises transmitting with a first terminal a start-up request for IP-based group speech communication to the at least one server controlling group speech communication; checking the speech communication group's location-related specifications that comprise the activity area of the speech communication group; checking the location information of at least one terminal determined in the start-up request for group speech communication; and, in response to the location information of the at least one terminal indicating that the terminal is located in the activity area of the speech communication group, establishing an IP-based speech communication group between the first terminal and the at least one terminal determined in the start-up request for group speech communication.

An embodiment of the invention comprises performing the actions determining the location of the speech communication group's terminals and activity area in a server unit functionally connected to the at least one server controlling group speech communication.

An embodiment of the invention comprises storing in the server unit the speech communication group's location-related specifications, in which the activity area of the speech communication group is bound to the location of a terminal belonging to the group. Thus, the reference point may be movable, whereby, when the activity of the group requires that group move together, for instance in the case of a hunting club, the activity area is automatically updated according to the location of the terminal serving as the reference point.

Alternatively, the speech communication group's location-related specifications that determine a predetermined geographical area as the activity area of the speech communication group are stored in the server unit. Determining the activity area in this way may be advantageous for instance in a sports event bound to a particular place.

An embodiment of the invention comprises determining the activity area as an area covering one or more cells of a mobile network. In the procedure of the invention, the location of the terminal does not have to be determined particularly accurately, whereby the cell-specific accuracy is typically sufficient for applying the invention. In addition, the cell-specific location information is directly applicable in the PoC system.

An embodiment of the invention comprises setting a condition based on presence information for at least one member of the speech communication group to activate the member for the IP-based speech communication group. Thus, a specification may be set for the application server according to which the location-relatedness is in use at a given terminal in given presence profiles (e.g. a meeting profile), whereas to other presence profiles the location-relatedness is not applied.

An embodiment of the invention comprises transmitting to the members of the speech communication group information on the activation of other group members for the IP-based speech communication group as presence information shown on the terminal displays. In this way, the group members receive an illustrative indication of other active group members.

### BRIEF DESCRIPTION OF THE FIGURES

The invention will be now explained in greater detail with regard to preferred embodiments, referring to the attached drawings, of which:
Figure 1 shows the basic structure of a PoC network arrangement;
Figure 2 shows a PoC network arrangement in more detail in connection with a GSM/GPRS network, and an application server according to one embodiment of the invention; and
Figure 3 shows a simplified signalling diagram of start-up of a location-related PoC session.

### DETAILED DESCRIPTION OF THE INVENTION

The present invention can be applied to any packet-switched mobile system. The invention is particularly preferably applicable to mobile systems based on a GPRS-type packet radio. In addition, the invention can be applied to situations where part of the data transfer, for instance data transfer of the PoC system part, takes place via a circuit-switched telecommunication connection. In the following, the primary embodiments of the invention will be described by means of a GPRS service and a UMTS or GSM system without restricting the invention to this particular packet radio system. The IP speech communication method used in the primary embodiments of the invention is Voice over IP (VoIP), but the invention is not restricted to this particular method.

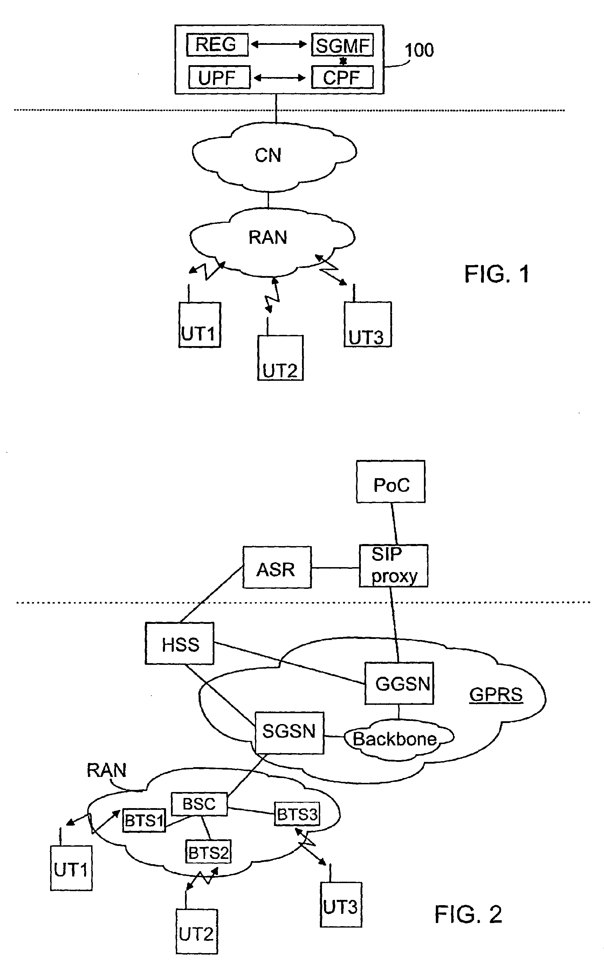

Figure 1 shows the basic structure of a PoC network arrangement on a general level. In Figure 1, on top of the mobile system, a packet-data-based group communication service 100 has been implemented in which the user plane functions UPF and control plane functions CPF have been differentiated from each other. The mobile network underneath comprises a core network CN and a radio access network RAN, to which user terminals UT1 to UT3 have a radio frequency connection. The mobile network may be, for example, a second generation (2G) GSM/GPRS network or a third generation (3G) UMTS network. Also a wireless local area network WLAN may function as the radio network RAN. The type and structure of the mobile network used in the PoC network arrangement are not, as such, essential with regard to the implementation of the PoC service as far as the mobile network provides a packet-data-based telecommunication connection for the PoC service. Thus, any packet-switched mobile system may be used to implement the network service.

The group communication service 100 may be implemented, for instance, as a server system comprising one or more servers, to which system the subscriber communication from terminals is transmitted via a proxy, because a PoC service does not typically enable direct end-to-end data transmission between the terminal and the servers. The PoC server system 100 comprises as separate logical functions the user plane functions UPF and the control plane functions CPF that communicate with PoC client applications of terminals via a packet-data-based, typically IP-based telecommunication connection provided by the mobile network. This data transmission comprises both transfer of user information (voice/data packets) and signalling relating to group communication. The logical functions of the server system 100 can be implemented with one server, or they may be distributed in an appropriate manner between several servers.

The task of the user plane functions UPF is to distribute voice/data packets to the terminals of the group in accordance with their group specifications and other settings. A prerequisite for data transfer performed by UPF is that the control functions CPF have first established and set up logical user plane connections to other group members. A voice group call may be based on the VolP and/or RTP protocol (Real Time Protocol). As a principal rule, a PoC voice call functions in such a way that all voice packets from an A subscriber are routed to the UPF function, which distributes the voice packets further to all B subscribers belonging to the group by using appropriate data transfer technology, such as one transmission of a single packet to all subscribers (multicasting) or several different transmissions of a single packet to all subscribers (multi-unicasting).

The control plane functions CPF comprise group call control and management. This includes the above-mentioned establishment, set-up and removal of logical user-plane connections group-specifically by using an appropriate call control protocol, such as SIP (Session Initiation Protocol), adding and removing of users from the group specifications, and registration and authentication of users.

As one logical function, the PoC server system 100 may comprise a subscriber and group management function SGMF, which comprises the required functions for managing subscriber and group data and reserving resources needed by subscribers and groups. SGMF transmits required information to the CPF, for instance when group specifications are defined. The subscriber and group management function SGMF may be controlled via a WWW-based control interface that can be used with known network browsers. The PoC server system 100 may further comprise a register (REG) in which the resource reservations of subscribers and groups, determined in SGMF, are stored.

Figure 2, in which the above-mentioned functionalities are described in more detail in connection with a GSM/GPRS network, also illustrates an application server according to the invention, as well as its operation. Figure 2 shows only part of the network elements of a GSM/GPRS network. The GSM/GPRS network also comprises a large number of other network elements, the description of which is not relevant to understanding the invention in this context.

With regard to the GSM network, Figure 2 illustrates as the access network only one radio network RAN (Radio Access Network), which comprises a base station controller BSC as well as typically several base transceiver stations BTS connected to the base station controller BSC, the available radio frequencies and channels of the base transceiver station BTS being controlled by the base station controller BSC. Around each base transceiver station, a cell is formed, and together they form a cellular network the geographical coverage of which is primarily determined on the basis of location of base stations. Each cell is identified with a cell identifier (Cell_ID) of its own. The user terminals UT of the mobile network communicate with the base stations BTS via a radio path. The base station controllers BSC communicate, in turn, with both the circuit-switched GSM core network and packet-switched GPRS network, of which only the GPRS system is described in greater detail.

The GPRS system connected to the GSM network comprises two nearly independent functions, i.e. a gateway GPRS support node GGSN and a serving GPRS support node SGSN. The GPRS network may comprise several gateway GPRS support nodes and serving GPRS support nodes, and typically several serving GPRS support nodes SGSN are connected to the gateway GPRS support node GGSN. Both nodes SGSN and GGSN function as routers that understand the mobility of the mobile station and attend to the control of the mobile system and routing of data packets to mobile stations irrespective of their location and the protocol used. The serving GPRS support node SGSN communicates with the mobile station UT via the mobile network. The connection to the mobile network (interface Gb) is typically formed via the base station controller BSC and further via a radio frequency connection formed from the base transceiver station BTS to the mobile station UT. The task of the serving GPRS support node SGSN is to detect the mobile stations that are capable of GPRS connections in its service area, to transmit and receive data packets from these mobile stations and to monitor the location of the mobile stations in their service area. The subscriber relation information is stored in a home subscriber server HSS.

The gateway GPRS support node GGSN functions as a gateway between the GPRS network and an external packet data network PDN. External data networks may be, for example, the Internet, an X.25 network or a private local area network. GGSN may also be directly connected to a private company network or a host, for instance as in the case of Figure 2, to a PoC server system via an SIP proxy. The data packets transferred in accordance with the GPRS protocol between the gateway GPRS support node GGSN and the serving GPRS support node SGSN are always what is called GTP-encapsulated (GPRS Tunnelling Protocol). This means that a data packet is encapsulated in another data packet when it is transferred from one end of the tunnel to the other. The gateway GPRS support node GGSN also contains the PDP (Packet Data Protocol) addresses and routing information, i.e. SGSN addresses, of the GPRS mobile stations. The routing information is thus used for linking data packets between an external data network and the serving GPRS support node SGSN. The gateway GPRS support node GGSN also unpacks the data packets received from the user terminal UT and transmits them to an appropriate data network. The GPRS backbone network between the gateway GPRS support node GGSN and the serving GPRS support node SGSN is a network utilizing the IP protocol (IPv4/IPv6).

Such a GSM/GPRS network known per se provides the PoC service with an IP-based telecommunication connection on top of which the PoC service itself is implemented as data transfer between the PoC server system and terminals' PoC client applications. For data transmission of the PoC service, GGSN is connected to the PoC server system via an SIP proxy, whereby the SIP proxy controls the VolP packets between the terminals and the PoC server system. In addition, Figure 2 shows an application server ASR according to the invention, comprising connection interfaces to both the SIP proxy and the GPRS register HSS. The application server ASR may be a separate server, or its functions may be implemented as a part of one of the servers of the PoC server system, but to illustrate the invention in this context, the functions of the application server according to the invention are described by means of a separate server ASR.

One of the tasks of the application server ASR is, in connection with a PoC service, to control the establishment of a location-related PoC group and to monitor the location of the terminals of such a PoC group. The system comprises a memory means, in connection with either the application server ASR or, for instance, a subscriber database in which the specifications of the location-related PoC groups are stored. Thus, the terminal user may utilize the procedure according to the invention and store in the PoC server system, for example in a register REG operated by the subscriber and group management function SGMF, a PoC group specification which comprises information on at least the terminals of the group, the reference point of the location-relatedness (e.g. location of the terminal expressing a connection set-up request) and the area determined from the reference point, in which area the members of the PoC group can be activated or kept active in the group. These specifications can also be transmitted in connection with the connection set-up request.

Thus, when a terminal belonging to a group or establishing a group transmits a connection set-up request to the PoC group in question, the task of the application server ASR is to check the location-related PoC group specifications given and, on the basis of these specifications, to further check the location of the other terminals of the group, determined in the connection set-up request, in relation to the reference point given. All terminals determined in the request that are positioned in the area according to the specifications can be activated to participate in the PoC group, whereby the application server ASR instructs the PoC server to perform the connection set-up.

In many cases, the reference point used is most preferably the terminal establishing a group (A subscriber, i.e. terminal transmitting the PoC connection set-up request), more accurately the position of this terminal. Also another terminal of the group can be used as the reference point. In these cases, the reference point is movable; in other words, when the terminal assumes a new location, the location of the other group members is checked in relation to this terminal. If any of the terminals of the group is not located in the area according to the specification any longer, it is removed from the active group. However, the application server ASR preserves the PoC group information of the terminal subscriber, so if the terminal returns to the determined activity area, the terminal is reactivated to participate in the PoC group.

The reference point and the activity area to be established around it may also be a fixedly determined geographical area (e.g. city, city sector or distance of 10 km from reference point), in which case the terminals of the PoC group within this area can be activated to participate in a PoC group call. Hence, the area is most preferably determined as mobile network cells covering the area, whereby the terminals of the PoC group communicating with the base transceiver stations of the cells can be activated to participate in a PoC group call. Also in the case of a movable reference point described above, determination of the activity area is most preferably bound to mobile system cells. The determination of the activity area may, for example, include all mobile system cells within a radius of 10 kilometres from the reference point.

The location of a terminal can be, per se, determined with several different methods, of which location updating methods the above-mentioned cell-based positioning (COO, Cell of Origin) is most preferably applicable to the procedure according to the invention, because the location of the terminal needs not be determined particularly accurately but cell-specific accuracy is typically sufficient for applying the invention. Further, the cell-specific location information (cell identifier, Cell_ID) is directly applicable to a PoC system. The location may also be determined based on different triangulation methods (E-OTD, Enhanced Observed Time Difference; TOA, Time of Arrival), in which case signalling of the mobile station is utilized, or by using satellite positioning, such as the GSP system (Global Positioning System), but the location information produced by these positioning methods must still be processed separately, for example in an application server ASR, in order for it to be usable for applying the invention.

Cell-specific determination of the activity area can also be utilized in such a way that a terminal at edges of the activity area receives a warning about the vicinity of the edge of the activity area. In other words, if an active terminal of a PoC group is positioned in the area of the outermost cell of the activity area, an indication of this can be transmitted to the terminal and shown on the display of the terminal for instance as an exclamation mark or another warning. The terminal may also comprise means for indicating the direction to the activity area, the means comprising a map application based on positioning information or a pointer based on a built-in compass. In such a case, if an active terminal is close to an edge of the activity area, or if the terminal has exited the activity area, the terminal user can be shown by means of these direction-pointing means in which direction the activity area is.

The PoC server system may also comprise what is called a presence server PS, which attends to the collection of terminals' property, presence and location information from different networks. Presence information (presences) of other terminals can be transmitted from the presence server to the terminal. In the above-described establishment of a location-related PoC group, this presence information can be applied in such a way that taking the location-relatedness into account in the activation of a terminal belonging to the group is bound to the presence profile used in the terminal in each particular case. Thus, the application server can be given a specification according to which the location-relatedness is in use at a given terminal for instance when the terminal has been set at a meeting profile, whereas to other presence profiles the location-relatedness is not applied. In addition, the presence information can be utilized for transmitting information to the other group members on the activation of a terminal to a PoC group or the deactivation of a terminal from a PoC group, whereby the presence information is transmitted to the other group members for instance as a status text message or as a picture indication shown on the terminal display. The SGMF function of the PoC system may be used to find the group members and to maintain groups and their status.

In the following, the procedure according to the invention and the operation of the application server ASR is explained in a case where a predetermined location-related PoC group is activated. The starting point in this example is thus a situation where the PoC group in question has been assigned in advance PoC group specifications that have been stored in a PoC server system. In this case, the PoC group specifications set the location of the terminal presenting a connection set-up request (A subscriber) as the reference point for location-relatedness, and an activity area for activating PoC group members has been defined around the reference point, the activity area covering the mobile network cells within a radius of 10 kilometres from the A subscriber.

Let us assume that the terminals UT1, UT2 and UT3 shown in Figure 2 belong to the same PoC group but are all located in different cells, in other words communicate with different base transceiver stations BTS1, BTS2, BTS3. At first, establishment of a PoC session is performed with the terminal UT1 (A subscriber) by pressing a tangent button in the terminal, whereby the terminal transmits a service request to the network. The radio network RAN, controlled by the serving GPRS support node SGSN, allocates an uplink transmission path for the connection, for instance a dedicated packet data channel and time-slot frame, and the GPRS network generates the GPRS context required in the connection. The GPRS network guides the PoC session set-up request to an SIP proxy, which transmits it further to the PoC server system.

After this, the PoC server system guides the request further to the application server ASR (or in practice to the application server functionality in the PoC server system), which then sets up a connection to the database HSS and retrieves the location of the terminal UT1 at an accuracy of one cell (Cell_ID). At the same time, the application server ASR checks in the database the cell identifiers of the mobile network cells at a radius of 10 kilometres from the A subscriber, i.e. the current activity area of the PoC group. Subsequently, the application server ASR examines the locations of the terminals UT2, UT3 of the other users (B subscribers) of the group determined in the request. The current cell identifiers (Cell_ID) of the B subscribers are checked and compared with the cell identifiers of the activity area. In response to the cell identifiers of the terminals UT2, UT3 belonging to the determined activity area, the PoC server system presents the PoC group call request also to the terminals UT2 and UT3.

When a PoC group call has been set up between the terminals UT1, UT2 and UT3, the application server ASR continues to monitor the location information. If the A subscriber's terminal UT1 assumes a new location, for instance in the neighbouring cell, a new PoC group activity area and cells included in it are defined, after which the cell identifiers of the other group members UT2, UT3 are rechecked and compared with the redefined activity area cell identifiers. Correspondingly, also changes in the B subscribers' location information are updated. If one of the B subscribers' terminals UT2, UT3 is no longer positioned in the activity area, due to the movements of either the A subscriber or B subscriber, it is removed from the active PoC group. The application server ASR, however, retains the PoC group information of this terminal user, and if the terminal returns to the determined activity area, the terminal is reactivated to participate in the PoC group.

The above arrangement functions in a case where all terminals of the PoC group are under the same network operator. In order to receive required location information on terminals that are under different network operators, an interface providing the location information must be arranged between the networks of different operators, for instance between databases HSS. Alternatively, a separate network element shared by different network operators can be used, in which case this network element would comprise only such location information, for example.

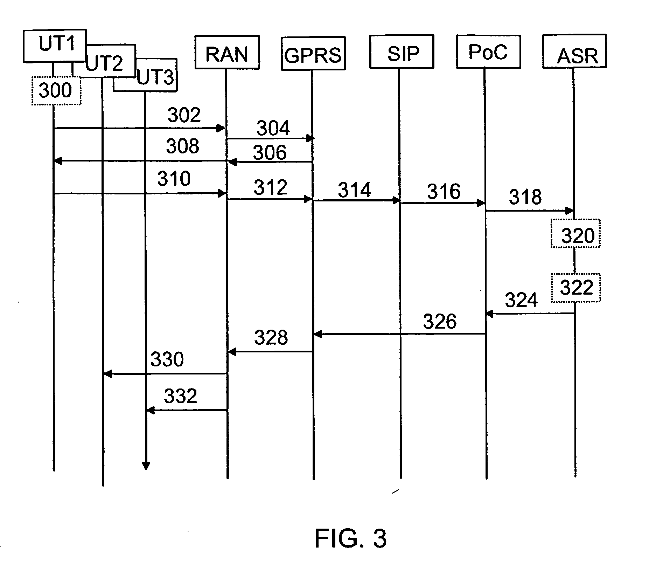

The procedure according to some embodiments of the invention can be illustrated with a simplified signalling diagram according to Figure 3, which shows start-up of a location-related PoC session between two terminals UT1 and UT2. For illustrative purposes, Figure 3 generalizes for example the functional entities RAN, GPRS and PoC into separate functions without going into their internal signalling or data transmission in more detail, as these are known per se to those skilled in the art and not relevant to understanding the invention. Figure 3 also shows the signalling related to the start-up of a PoC session in a simplified manner.

In Figure 3, the terminal UT1 functions as the A subscriber that performs the establishment of a PoC session by pressing a tangent button (300). The terminal UT1 transmits a service request (302) to the network, which expresses that the terminal UT1 needs both an uplink radio path and a GPRS context for a PoC session. The GPRS Attach request is guided from the radio network RAN further to the GPRS network (304). The GPRS network generates, in a manner known per se, a GPRS context (306) required in the connection, the context being used via a dedicated packet data channel (308) allocated for the connection by the radio network RAN.

The establishment of the GPRS context and the dedicated packet-channel is indicated to the terminal UT1 as a sign of the PoC channel being open so that the subscriber of the terminal UT1 can start speaking. The terminal UT1 transmits the first RTP message (310), which comprises the group call identifier of the terminal UT1 and the first VolP RTP voice packets. The radio network RAN1 guides the PoC session set-up request to a GPRS network (312), which guides it further to an SIP proxy (314), which, in turn, transmits the PoC session set-up request further to a PoC server system (316).

The PoC server system guides the PoC session establishment request further to an application server ASR (318), which checks in the database HSS the cell identifier of the terminal UT1 and the cell identifiers included in the current activity area (320). Next, the application server ASR checks in the database the cell identifiers of the terminals UT2, UT3 of the B subscribers determined in the request and compares (322) them with the cell identifiers of the activity area. If it is then noted that the cell identifiers of the terminals UT2, UT3 belong to the determined activity area, the application server ASR transmits information on this to a PoC server system (324), which directs the PoC group call request further to the terminals UT2, UT3 (330, 332) via a GPRS network (326) and a radio network RAN (328).

The functionality of the application server according to the invention can be most preferably implemented as a program code stored in the memory of the server, whereby the server may be a separate server, or the functionalities of the application server may be implemented as a part of one of the servers in the PoC server system. Such a program code comprises at least a computer program code for functionally connecting the server unit (ASR) to at least one server (PoC) controlling group speech communication; a computer program code for storing location-related specifications for a speech communication group to be established, the specifications comprising a predetermined maximum distance from a reference point, set between the group members; and a computer program code for controlling the establishment of an IP-based speech communication group between at least two of the terminals in such a way that the activation of the group members requires location within the activity area determined by the maximum distance.

It will be obvious to a person skilled in the art that as the technology advances, the basic idea of the invention can be implemented in a plurality of ways. The invention and its embodiments are not restricted to the above examples but may vary within the scope of the claims.

## Claims

1. A method for establishing an IP-based speech communication group in a mobile system comprising several terminals (UT1, UT2) as well as at least one wireless access network (RAN) and a packet data network (GPRS) connected to it, for transmitting IP data packets between terminals (UT1, UT2) and at least one server (PoC) controlling group speech communication, wherein location-related specifications are set for a speech communication group, and an IP-based speech communication group is established between at least two of the terminals, **characterized by**
the location-related specifications for the speech communication group to be established comprising a predetermined maximum distance from a reference point, set between the group members; and
the activation of the group members requiring location within an activity area determined by the maximum distance, wherein, in response to location information of at least one terminal (UT2, UT3) determined in a start-up request from a first terminal for IP-based group speech communication indicating that the at least one terminal (UT2, UT3) is located in the activity area of the speech communication group, an IP-based speech communication group is established (326 - 330) between the first terminal (UT1) and the at least one terminal (UT2, UT3).

2. A method according to claim 1, **characterized by**
transmitting (302) with the first terminal the start-up request for IP-based group speech communication to the at least one server controlling group speech communication;
checking (320) the speech communication group's location-related specifications that comprise the activity area of the speech communication group;
checking (322) the location information of the at least one terminal determined in the start-up request for group speech communication to note that the at least one terminal is located in the activity area of the speech communication group.

3. A method according to claim 1 or 2, **characterized by**
performing the actions (320) determining the location of the speech communication group's terminals and activity area in a server unit functionally connected to the at least one server controlling group speech communication.

4. A method according to claim 3, **characterized by**
storing in the server unit the speech communication group's location-related specifications, in which the activity area of the speech communication group is bound to the location of a terminal belonging to the group.

5. A method according to claim 3, **characterized by**
storing the speech communication group's location-related specifications that determine a predetermined geographical area as the activity area of the speech communication group in the server unit.

6. A method according to any one of the preceding claims, **characterized by**
determining the activity area as an area covering one or more cells of a mobile network.

7. A method according to claim 6, **characterized by**
transmitting to a member of the speech communication group a warning indication to be shown on the terminal display if the terminal is positioned in the outer cell of the activity area.

8. A method according to any one of the preceding claims, **characterized by**
setting a condition based on presence information for at least one member of the speech communication group to activate the member for an IP-based speech communication group.

9. A method according to any one of the preceding claims, **characterized by**
transmitting to the members of the speech communication group information on the activation of other group members for the IP-based speech communication group as presence information shown on the terminal displays.

10. A mobile communication system comprising several terminals (UT1, UT2) as well at least one wireless access network (RAN) and a packet data network (GPRS) connected to it for transmitting IP data packets between terminals (UT1, UT2) and at least one server (PoC) controlling group speech communication, the system being arranged to store location-related specifications for a speech communication group, and to establish an IP-based speech communication group between at least two of the terminals, **characterized in that**
the mobile system comprises a server unit functionally connected to the at least one server controlling group speech communication, the server unit being arranged
to store for the speech communication group to be established the location-related specifications comprising a predetermined maximum distance from a reference point, set between the group members; and
to control establishment of the IP-based speech communication group between at least two of the terminals in such a way that the activation of the group members requires location within an activity area determined by the maximum distance, wherein the IP-based speech communication group establishment (326 - 330) is arranged in the system between a first terminal (UT1) and at least one terminal (UT2, UT3) response to location information of the at least one terminal (UT2, UT3) determined in a start-up request from the first terminal (UT1) for IP-based group speech communication indicating that the at least one terminal (UT2, UT3) is located in the activity area of the speech communication group.

11. A mobile communication system according to claim 10, **characterized in that**
the first terminal belonging to said communication group is arranged to transmit (302) the start-up request for IP-based group speech communication to the at least one server controlling group speech communication;
the server unit is arranged to check (320) the speech communication group's location-related specifications that comprise the activity area of the speech communication group;
the server unit is arranged to check (322) the location information of the at least one terminal determined in the start-up request for group speech communication;
in response to the location information of the at least one terminal indicating that the at least one terminal is located in the activity area of the speech communication group, the server unit is arranged to control (324) the at least one server controlling group speech communication to establish the IP-based speech communication group.

12. A mobile communication system according to claim 10 or 11, **characterized in that**
at least one terminal belonging to the communication group is arranged to store in the server unit the speech communication group's location-related specifications, in which the activity area of the speech communication group is bound to the location of a terminal belonging to the group.

13. A mobile communication system according to claim 10 or 11, **characterized in that**
at least one terminal belonging to the communication group is arranged to store the speech communication group's location-related specifications that determine a predetermined geographical area as the activity area of the speech communication group in the server unit.

14. A mobile communication system according to any one of claims 10 to 13,**characterized in that**
the activity area is arranged to be determined as an area covering one or more cells of a mobile network.

15. A mobile communication system according to any one of claims 10 to 14, **characterized in that**
a presence server unit is arranged to be functionally connected to the at least one server controlling group speech communication, whereby
the server unit is arranged to store a condition based on presence information for at least one member of the speech communication group to activate the member to participate in the IP-based speech communication group.

16. A mobile communication system according to claim 15, **characterized in that**
the at least one server is arranged to transmit to the members of the speech communication group information on the activation of other group members for the IP-based speech communication group as presence information shown on the terminal displays.

17. A mobile communication system according to any one of claims 10 to 16, **characterized in that**
the mobile system comprises an interface to the location information of subscribers of another network operator.

18. A server unit (ASR), for a mobile system comprising a plurality of terminals (UT1, UT2) as well as at least one wireless access network (RAN) and a packet data network (GPRS) connected to it for transmitting IP data packets between terminals (UT1, UT2) and at least one server (PoC) controlling group speech communication, **characterized in that**
the server unit (ASR) is functionally connectable to the at least one server (PoC) controlling group speech communication, and the server unit is arranged, in connection with IP-based group speech communication,
to store, for the speech communication group to be established, location-related specifications comprising a predetermined maximum distance from a reference point, set between the group members; and
to control the establishment of an IP-based speech communication group between at least two of the terminals (UT1, UT2, UT3) in such a way that the activation of the group members requires location within the activity area determined by the maximum distance, wherein in response to location information of at least one terminal (UT2, UT3) determined in a set-up request from a first terminal for IP-based group speech communication indicating that the at least one terminal (UT2, UT3) is located in the activity area of the speech communication group, the server unit (ASR) is arranged to control (324) establishment of the IP-based speech communication group (326 - 330) between the first terminal (UT1) and the at least one terminal (UT2, UT3).

19. A server unit (ASR), according to claim 18, **characterized in that**
in response to the set-up request for IP-based group speech communication transmitted (302) by the first terminal of the communication group to the at least one server controlling group speech communication, the server unit is arranged to check (320) the speech communication group's location-related specifications that comprise the activity area of the speech communication group;
the server unit is arranged to check (322) the location information of the at least one terminal determined in the start-up request for group speech communication;
in response to the location information of the at least one terminal indicating that the at least one terminal is located in the activity area of the speech communication group, the server unit is arranged to control (324) the at least one server controlling group speech communication to establish the IP-based speech communication group.

20. A server unit (ASR) according to claim 18 or 19, **characterized in that**
the server unit is arranged to store the speech communication group's location-related specifications transmitted by at least one terminal belonging to the communication group, in which specifications the activity area of the speech communication group is bound to the location of a terminal belonging to the group.

21. A server unit according to claim 18 or 19, **characterized in that**
the server unit is arranged to store the speech communication group's location-related specifications transmitted by at least one terminal belonging to the communication group, in which specifications the activity area of the speech communication group is defined as a predetermined geographical area.

22. A server unit according to any one of claims 18 to 21, **characterized in that**
a presence server unit is functionally connected to the at least one server controlling group speech communication, whereby
the server unit is arranged to store a condition based on presence information for at least one member of the speech communication group to activate the member to participate in the IP-based speech communication group.

23. A computer program product for controlling a server unit (ASR) in connection with IP-based group speech communication, the server unit being adaptable to a mobile system comprising several terminals (UT1, UT2, UT3) as well as one wireless access network (RAN) and a packet data network (GPRS) connected to it for transmitting IP data packets between the terminals and at least one server (PoC) controlling group speech communication, **characterized in that** the computer program product comprises
a computer program code for functionally connecting the server unit (ASR) to the at least one serve (PoC) controlling group speech communication;
a computer program code for storing location-related specifications for a speech communication group to be established, the specifications comprising a predetermined maximum distance from a reference point, set between the group members; and
a computer program code for controlling the establishment of an IP-based speech communication group between at least two of the terminals (UT1, UT2) in such a way that the activation of the group members requires location within the activity area determined by the maximum distance, the computer program code being adapted to control (324) the establishment of the IP-based speech communication group (326 - 330) between a first terminal (UT1) and at least one terminal (UT2, UT3) in response to location information of at least one terminal (UT2, UT3) determined in a set-up request from the first terminal (UT1) for IP-based group speech communication indicating that the at least one terminal (UT2, UT3) is located in the activity area of the speech communication group.

## Patentansprüche

1. Verfahren zum Bilden einer IP-basierten Sprachkommunikationsgruppe in einem mobilen System, das sowohl mehrere Endgeräte (UT1, UT2) als auch mindestens ein Funkzugangsnetz (RAN) und ein Paketdatennetz (GPRS), das mit diesem verbunden ist, zum Senden von IP-Datenpaketen zwischen Endgeräten (UT1, UT2) und mindestens einem Server (PoC) aufweist, der eine Gruppensprachkommunkation steuert, wobei ortsbedingte Spezifikationen für eine Sprachkommunikationsgruppe festgelegt sind und eine IP-basierte Sprachkommunikationsgruppe zwischen mindestens zwei der Endgeräte gebildet wird, ***gekennzeichnet durch***
die ortsbedingten Spezifikationen für die zu bildende Sprachkommunikationsgruppe, die einen vorbestimmten maximalen Abstand von einem Bezugspunkt aufweisen, der zwischen den Gruppenmitgliedern festgelegt ist; und
das Aktivieren der Gruppenmitglieder, das einen Ort innerhalb eines Aktivitätsbereichs erfordert, der **durch** den maximalen Abstand bestimmt ist, wobei als Reaktion auf eine Ortsinformation von mindestens einem Endgerät (UT2, UT3), das in einer Startanforderung von einem ersten Endgerät für eine IP-basierte Gruppensprachkommunikation bestimmt wird, die anzeigt, dass sich mindestens ein Endgerät (UT2, UT3) in dem Aktivitätsbereich der Sprachkommunikationsgruppe befindet, eine IP-basierte Sprachkommunikationsgruppe zwischen dem ersten Endgerät (UT1) und dem mindestens einen Endgerät (UT2, UT3) gebildet wird (326 bis 330).

2. Verfahren nach Anspruch 1, ***gekennzeichnet durch***
Senden (302) der Startanforderung für eine IP-basierte Gruppensprachkommunkation mit dem ersten Endgerät zu dem mindestens einen Server, der die Gruppensprachkommunkation steuert;
Überprüfen (320) der ortsbedingten Spezifikationen der Sprachkommunikationsgruppe, die den Aktivitätsbereich der Sprachkommunikationsgruppe aufweisen; und
Überprüfen (322) der Ortsinformation des mindestens einen Endgeräts, die in der Startanforderung für eine Gruppensprachkommunkation bestimmt wird, um zu vermerken, dass sich das mindestens eine Endgerät in dem Aktivitätsbereich der Sprachkommunikationsgruppe befindet.

3. Verfahren nach Anspruch 1 oder 2, ***gekennzeichnet durch***
Durchführen der Vorgänge (320), die den Ort der Endgeräte der Sprachkommunikationsgruppe und einen Aktivitätsbereich in einer Servereinheit bestimmen, die funktional mit dem mindestens einen Server verbunden ist, der die Gruppensprachkommunikation steuert.

4. Verfahren nach Anspruch 3, ***gekennzeichnet durch***
Speichern der ortsbedingten Spezifikationen der Sprachkommunikationsgruppe, in welchen der Aktivitätsbereich der Sprachkommunkationsgruppe an den Ort eines Endgeräts gebunden ist, das der Gruppe zugehörig ist, in der Servereinheit.

5. Verfahren nach Anspruch 3, ***gekennzeichnet durch***
Speichern der ortsbedingten Spezifikationen der Sprachkommunikationsgruppe, die einen vorbestimmten geografischen Bereich als den Aktivitätsbereich der Sprachkommunkationsgruppe bestimmen, in der Servereinheit.

6. Verfahren nach einem der vorhergehenden Ansprüche, ***gekennzeichnet durch***
Bestimmen des Aktivitätsbereichs als einen Bereich, der eine oder mehrere Zellen eines mobilen Netzes bedeckt.

7. Verfahren nach Anspruch 6, ***gekennzeichnet durch***
Senden eines auf einer Endgerätanzeige zu zeigenden Warnhinweises zu einem Mitglied der Sprachkommunikationsgruppe, wenn sich das Endgerät in der äusseren Zelle des Aktivitätsbereichs befindet.

8. Verfahren nach einem der vorhergehenden Ansprüche, ***gekennzeichnet durch***
Festlegen eines Zustands auf der Grundlage einer Vorhandenseinsinformation für mindestens ein Mitglied der Sprachkommunikationsgruppe, um das Mitglied für eine IP-basierte Sprachkommunkationsgruppe zu aktivieren.

9. Verfahren nach einem der vorhergehenden Ansprüche, ***gekennzeichnet durch***
Senden einer Information bezüglich des Aktivierens von anderen Gruppenmitgliedern für die IP-basierte Sprachkommunikationsgruppe als auf den Endgerätanzeigen gezeigter Vorhandenseinsinformation zu den Mitgliedern der Sprachkommunikationsgruppe.

10. Mobiles Kommunikationssystem, das sowohl mehrere Endgeräte (UT1, UT2) als auch mindestens ein Funkzugangsnetz (RAN) und ein Paketdatennetz (GPRS), das mit diesem verbunden ist, zum Senden von IP-Datenpaketen zwischen Endgeräten (UT1, UT2) und mindestens einem Server (PoC) aufweist, der eine Gruppensprachkommunikation steuert, wobei das System dazu ausgelegt ist, ortsbedingte Spezifikationen für eine Sprachkommunikationsgruppe zu speichern und eine IP-basierte Sprachkommunikationsgruppe zwischen mindestens zwei der Endgeräte zu bilden, ***dadurch gekennzeichnet, dass***
das mobile System eine Servereinheit aufweist, die funktional mit mindestens einem Server verbunden ist, der die Gruppensprachkommunikation steuert, wobei die Servereinheit dazu ausgelegt ist,
für die zu bildende SprachlCOmmunikationsgruppe die ortsbedingten Spezifikationen zu speichern, die einen vorbestimmten maximalen Abstand von einem Bezugspunkt aufweisen, der zwischen den Gruppenmitgliedern festgelegt ist; und
ein Bilden der IP-basierten SprachlCOmmunikationsgruppe zwischen mindestens zwei der Endgeräte auf eine derartige Weise zu steuern, dass das Aktivieren der Gruppenmitglieder einen Ort innerhalb eines Aktivitätsbereichs erfordert, der durch den maximalen Abstand bestimmt ist, wobei das Bilden (326 bis 330) der IP-basierten Sprachkommunikationsgruppe in dem System als Reaktion auf eine Ortsinformation mindestens eines Endgeräts (UT2, UT3), das in einer Startanforderung von einem ersten Endgerät (UT1) für eine IP-basierte Gruppensprachkommunikation bestimmt wird, die anzeigt, dass sich das mindestens eine Endgerät (UT2, UT3) in dem Aktivitätsbereich der Sprachkommunifcationsgruppe befindet, zwischen dem ersten Endgerät (UT1) und dem mindestens einen Endgerät (UT2, UT3) angeordnet ist.

11. Mobiles Kommunikationssystem nach Anspruch 10, ***dadurch gekennzeichnet, dass***
das erste Endgerät, das der Kommunikationsgruppe zugehörig ist, dazu ausgelegt ist, die Startanforderung für die IP-basierte Gruppensprachkommunikation zu dem mindestens einen Server zu senden (302), der die Gruppensprachkommunikation steuert;
die Servereinheit dazu ausgelegt ist, die ortsbedingten Spezifikationen der Sprachkommunikationsgruppe zu überprüfen (320), die den Aktivitätsbereich der Sprachkommunikationsgruppe aufweisen;
die Servereinheit dazu ausgelegt ist, die Ortsinformation des mindestens einen Endgeräts zu überprüfen (322), das in der Startanforderung für die Gruppensprachkommunikation bestimmt wird; und
die Servereinheit als Reaktion auf die Ortsinformation des mindestens einen Endgeräts, die anzeigt, dass sich das mindestens eine Endgerät innerhalb des Aktivitätsbereichs der Sprachkommunikationsgruppe befindet, dazu ausgelegt ist, den mindestens einen Server zu steuern (324), der die Gruppensprachkommunikation steuert, um die IP-basierte Sprachkommunikationsgruppe zu bilden.

12. Mobiles Kommunikationssystem nach Anspruch 10 oder 11, ***dadurch gekennzeichnet, dass***
mindestens ein Endgerät, das der Kommunikationsgruppe zugehörig ist, dazu ausgelegt ist, die ortsbedingten Spezifikationen der Sprachkommunikationsgruppe, in welchen der Aktivitätsbereich der Kommunikationsgruppe an den Ort eines Endgeräts gebunden ist, das der Gruppe zugehörig ist, in der Servereinheit zu speichern.

13. Mobiles Kommunikationssystem nach Anspruch 10 oder 11, ***dadurch gekennzeichnet, dass***
mindestens ein Endgerät, das der Kommunikationsgruppe zugehörig ist, dazu ausgelegt ist, die ortsbedingten Spezifikationen der Sprachkommunikationsgruppe, die einen vorbestimmten geografischen Bereich als den Aktivitätsbereich der Sprachkommunikationsgruppe bestimmen, in der Servereinheit zu speichern.

14. Mobiles Kommunikationssystem nach einem der Ansprüche 10 bis 13, ***dadurch gekennzeichnet, dass***
der Aktivitätsbereich dazu ausgelegt ist, als ein Bereich bestimmt zu werden, der eine oder mehrere Zellen eines mobilen Netzes bedeckt.

15. Mobiles Kommunikationssystem nach einem der Ansprüche 10 bis 14, ***dadurch gekennzeichnet, dass***
eine Vorhandenseinsservereinheit dazu ausgelegt ist, funktional mit dem mindestens einen Server verbunden zu sein, der die Gruppensprachkommunikation steuert, wodurch
die Servereinheit dazu ausgelegt ist, eine Zustand auf der Grundlage einer Vorhandenseinsinformation für mindestens ein Mitglied der Sprachkommunikationsgruppe zu speichern, um das Mitglied zu aktivieren, um in der IP-basierten Sprachkommunikationsgruppe teilzunehmen.

16. Mobiles Kommunikationssystem nach Anspruch 15, ***dadurch gekennzeichnet, dass***
der mindestens eine Server dazu ausgelegt ist, eine Information bezüglich des Aktivierens von anderen Gruppenmitgliedern für die IP-basierte Sprachkommunikationsgruppe als auf den Endgeräteanzeigen gezeigte Vorhandenseinsinformation zu den Mitgliedern der Sprachkommunikationsgruppe zu senden.

17. Mobiles Kommunikationssystem nach einem der Ansprüche 10 bis 16, ***dadurch gekennzeichnet, dass***
das mobile System eine Schnittstelle zu der Ortsinformation von Teilnehmern eines anderen Netzbetreibers aufweist.

18. Servereinheit (ASR) für ein mobiles System, das sowohl eine Mehrzahl von Endgeräten (UT1, UT2) als auch mindestens ein Funkzugangsnetz (RAN) und ein Paketdatennetz (GPRS), das mit diesem verbunden ist, zum Senden von IP-Datenpaketen zwischen Endgeräten (UT1, UT2) und mindestens einem Server (PoC) aufweist, der eine Gruppensprachkommunikation steuert, ***dadurch gekennzeichnet, dass***
die Servereinheit (ASR) funktional mit dem mindestens einen Server (PoC) verbindbar ist, der die Gruppensprachkommunikation steuert, und die Servereinheit dazu ausgelegt ist, in Verbindung mit der IP-basierten Gruppensprachkommunikation,
für die zu bildende Sprachkommunikationsgruppe ortsbedingte Spezifikationen zu speichern, die einen vorbestimmten maximalen Abstand von einem Bezugspunkt aufweisen, der zwischen den Gruppenmitgliedern festgelegt ist; und
das Bilden einer IP-basierten Sprachkommunikationsgruppe zwischen mindestens zwei der Endgeräte (UT1, UT2, UT3) auf eine derartige Weise zu steuern, dass das Aktivieren der Gruppenmitglieder einen Ort innerhalb des Aktivitätsbereichs erfordert, der durch den maximalen Abstand bestimmt ist, wobei als Reaktion auf eine Ortsinformation von mindestens einem Endgerät (UT2, UT3), das in einer Startanforderung von einem ersten Endgerät für eine IP-basierte Gruppensprachkommunikation bestimmt wird, die anzeigt, dass sich das mindestens eine Endgerät (UT2, UT3) innerhalb des Aktivitätsbereichs der Sprachkommunikationsgruppe befindet, die Servereinheit (ASR) dazu ausgelegt ist, ein Bilden (326 bis 330) der IP-basierten Sprachkommunikationsgruppe zwischen dem ersten Endgerät (UT1) und dem mindestens einen Endgerät (UT2, UT3) zu steuen (324).

19. Servereinheit (ASR) nach Anspruch 18, ***dadurch gekennzeichnet, dass***
als Reaktion auf die Startanforderung für die IP-basierte Gruppensprachkommunikation, die von dem ersten Endgerät der Kommunikationsgruppe zu dem mindestens einen Server gesendet wird (302), der die Gruppensprachkommunikation steuert, die Servereinheit dazu ausgelegt ist, die ortsbedingten Spezifikationen der Sprachkommunikationsgruppe zu überprüfen, die den Aktivitätsbereich der Sprachkommunikationsgruppe aufweisen;
die Servereinheit dazu ausgelegt ist, die Ortsinformation des mindestens einen Endgeräts zu überprüfen (320), das in der Startanforderung für die Gruppensprachkommunikation bestimmt wird; und
als Reaktion auf die Ortsinformation des mindestens einen Endgeräts, die anzeigt, dass sich das mindestens eine Endgerät innerhalb des Aktivitätsbereichs der Sprachkommunikationsgruppe befindet, die Servereinheit dazu ausgelegt ist, den mindestens einen Server zu steuern (324), der die Gruppensprachkommunikation steuert, um die IP-basierte Sprachkommunikationsgruppe zu bilden.

20. Servereinheit (ASR) nach Anspruch 18 oder 19, ***dadurch gekennzeichnet, dass***
die Servereinheit dazu ausgelegt ist, die ortsbedingten Spezifikationen der Sprachkommunikationsgruppe zu speichern, die von mindestens einem Endgerät gesendet werden, das der Kommunikationsgruppe zugehörig ist, wobei in diesen Spezifikationen der Aktivitätsbereich der Sprachkommunikationsgruppe an den Ort eines Endgeräts gebunden ist, das der Gruppe zugehörig ist.

21. Servereinheit nach Anspruch 18 oder 19, ***dadurch gekennzeichnet, dass***
die Servereinheit dazu ausgelegt ist, die ortsbedingten Spezifikationen der Sprachkommunikationsgruppe zu speichern, die von mindestens einem Endgerät gesendet werden, das der Kommunikationsgruppe zugehörig ist, wobei in diesen Spezifikationen der Aktivitätsbereich der Sprachkommunikationsgruppe als ein vorbestimmter geografischer Bereich definiert ist.

22. Servereinhteit (ASR) nach einem der Ansprüche 18 bis 21, ***dadurch gekennzeichnet, dass***
eine Vorhandenseinsservereinheit funktional mit dem mindestens einen Server verbunden ist, der die Gruppensprachkommunikation steuert, wodurch
die Servereinheit dazu ausgelegt ist, einen Zustand auf der Grundlage einer Vorhandenseinsinformation für mindestens ein Mitglied der Sprachkommunikationsgruppe zu speichern, um das Mitglied zu aktivieren, um in der IP-basierten Sprachkommunikationsgruppe teilzunehmen.

23. Computerprogrammprodukt zum Steuern einer Servereinheit (ASR) in Verbindung mit einer IP-basierten Gruppensprachkommunikation, wobei die Servereinheit an ein mobiles System anpassbar ist, das sowohl mehrere Endgeräte (UT1, UT2, UT3) als auch ein Funkzugangsnetz (RAN) und ein Paketdatennetz (GPRS), das mit diesem verbunden ist, zum Senden von IP-Datenpaketen zwischen den Endgeräten und mindestens einem Server (PoC) aufweist, der eine Gruppensprachkommunikation steuert, ***dadurch gekennzeichnet, dass*** das Computerprogrammprodukt aufweist
einen Computerprogrammcode zum funktionalen Verbinden der Servereinheit (ASR) mit dem mindestens einen Server (PoC), der die Gruppensprachkommunikation steuert;
einen Computerprogrammcode zum Speichern von ortsbedingten Spezifikationen für eine zu bildende Sprachkommunikationsgruppe, wobei die Spezifikationen einen vorbestimmten maximalen Abstand von einem Bezugspunkt aufweisen, der zwischen den Gruppenmitgliedern festgelegt ist; und
einen Computerprogrammcode zum Steuern des Bildens einer IP-basierten Sprachkommunikationsgruppe zwischen mindestens zwei der Endgeräte (UT1, UT2) auf eine derartige Weise, dass das Aktivieren der Gruppenmitglieder einen Ort innerhalb des Aktivitätsbereichs erfordert, der durch den maximalen Abstand bestimmt ist, wobei der Computerprogrammcode dazu ausgelegt ist, das Bilden (326 bis 330) der IP-basierten Sprachkommunikationsgruppe zwischen einem ersten Endgerät (UT1) und mindestens einem Endgerät (UT2, UT3) als Reaktion auf eine Ortsinformation von mindestens einem Endgerät (UT2, UT3) zu steuern, das in einer Startanfordeurng von dem ersten Endgerät (UT1) für eine IP-basierte Gruppensprachkommunikation bestimmt wird, die anzeigt, dass sich das mindestens eine Endgerät (UT2, UT3) in dem Aktivitätsbereich der Sprachkommunikationsgruppe befindet.

## Revendications

1. Un procédé pour établir un groupe de communication vocale à base IP dans un système mobile, comprenant plusieurs terminaux (UT1, UT2), ainsi qu'au moins un réseau d'accès sans fil (RAN) et un réseau à paquets de données (GPRS) lui étant connecté, pour transmettre des paquets de données IP entre des terminaux (UT1, UT2), et au moins un serveur (PoC) commandant une communication vocale de groupe, dans lequel des spécifications liées à la localisation sont fixées pour un groupe de communication vocale, et un groupe de communication vocale à base IP est établi entre au moins deux des terminaux, **caractérisé par le fait que**
les spécifications liées à la localisation, pour le groupe de communication vocale à établir, comprennent une distance maximale prédéterminée depuis un point de référence, fixé entre les membres du groupe ; et
l'activation des membres du groupe demandant la localisation dans une aire d'activité déterminée par la distance maximale dans lequel, en réponse à une information de localisation d'au moins un terminal (UT2, UT3) déterminé dans une requête de démarrage depuis un premier terminal pour une communication vocale de groupe à base IP, indiquant que le au moins un terminal (UT2, UT3) est situé dans l'aire d'activité du groupe de communication vocale, un groupe de communication vocale à base IP est établi (326 à 330) entre le premier terminal (UT1) et le au moins un terminal (UT2, UT3).

2. Un procédé selon la revendication 1, **caractérisé par** :
l'émission (302), avec le premier terminal, de la requête de démarrage pour une communication vocale de groupe à base IP, au au moins un serveur commandant la communication vocale de groupe ;
le contrôle (320) des spécifications liées à la localisation, du groupe de communication vocale, comprenant l'aire d'activité du groupe de communication vocale ;
le contrôle (322) de l'information de localisation du au moins un terminal déterminé dans la requête de démarrage pour une communication vocale de groupe, pour noter que le au moins un terminal est localisé dans l'aire d'activité du groupe de communication vocale.

3. Un procédé selon la revendication 1 ou 2, **caractérisé par** :
l'accomplissement des actions (320) déterminant l'emplacement des terminaux du groupe de communication vocale et de l'aire d'activité dans une unité de serveur connectée fonctionnellement au au moins un serveur commandant la communication de groupe vocale de commande de serveur.

4. Un procédé selon la revendication 3, **caractérisé par** :
le stockage, dans l'unité de serveur, des spécifications liées à la localisation du groupe de communication vocale, dans lequel l'aire d'activité du groupe de communication vocale est liée à l'emplacement d'un terminal appartenant au groupe.

5. Un procédé selon la revendication 3, **caractérisé par** :
le stockage des spécifications liées à la localisation du groupe de communication vocale, qui déterminent une aire géographique prédéterminée comme étant l'aire d'activité du groupe de communication vocale dans l'unité de serveur.

6. Un procédé selon l'une quelconque des revendications précédentes, **caractérisé par** :
la détermination de l'aire d'activité en tant qu'aire couvrant une ou plusieurs cellules d'un réseau mobile.

7. Un procédé selon la revendication 6, **caractérisé par** :
la transmission, à un membre du groupe de communication vocale, d'une indication d'avertissement, devant être présentée sur l'écran d'affichage du terminal, si le terminal est situé dans la cellule extérieure de l'aire d'activité.

8. Un procédé selon l'une quelconque des revendications précédentes, **caractérisé par** :
la fixation d'une condition d'après une information de présence, pour au moins un membre du groupe de communication vocale, afin d'activer l'organe pour un groupe de communication vocale à base IP.

9. Un procédé selon l'une quelconque des revendications précédentes, **caractérisé par** :
la transmission, aux membres du groupe de communication vocale, d'une information concernant l'activation d'autres membres du groupe pour le groupe de communication vocale à base IP, en tant qu'information de présence présentée sur les affichages de terminaux.

10. Un système de communication mobile comprenant plusieurs terminaux (UT1, UT2), ainsi qu'au moins un réseau à accès sans fil (RAN) et un réseau à paquets de données (GPRS) lui étant connecté pour la transmission de paquets de données (IP) entre des terminaux (UT1, UT2) et au moins un serveur (PoC) commandant la communication vocale de groupe, le système étant agencé pour stocker des spécifications liées à la localisation pour un groupe de communication vocale, et pour établir un groupe de communication vocale à base IP entre au moins deux des terminaux, **caractérisé en ce que**
le système mobile comprend une unité de serveur connectée fonctionnellement au au moins un serveur commandant la communication vocale de groupe, l'unité de serveur étant agencée
pour stocker, pour le groupe de communication vocale devant être établi, les spécifications liées à la localisation, comprenant une distance maximale prédéterminée depuis un point de référence, fixée entre les membres du groupe ; et
pour commander l'établissement du groupe de communication vocale à base IP entre au moins deux des terminaux, de manière que l'activation des membres du groupe demande la localisation dans une aire d'activité déterminée par la distance maximale, dans lequel l'établissement de groupe de communication vocale à base IP (326 à 330) est agencé dans le système entre un premier terminal (UT1) et au moins un terminal (UT2, UT3) en réponse à une information de localisation du au moins un terminal (UT2, UT3), déterminée dans une requête de démarrage émanant du premier terminal (UT1) pour une communication vocale de groupe à base IP, indiquant que le au moins un terminal (UT2, UT3) est localisé dans l'aire d'activité du groupe de communication vocale.

11. Un système de communication mobile selon la revendication 10, **caractérisé en ce que**:
le premier terminal appartenant audit groupe de communication est agencé pour transmettre (302) la requête de démarrage pour une communication vocale de groupe à base IP au au moins un serveur commandant la communication vocale de groupe ;
l'unité de serveur est agencée pour contrôler (320) les spécifications, afférentes à la localisation du groupe de communication vocale, qui comprennent l'aire d'activité du groupe de communication vocale ;
l'unité de serveur est agencée pour contrôler (322) l'information de localisation du au moins un terminal, déterminé dans la requête de démarrage pour une communication vocale de groupe ;
en réponse à l'information de localisation du au moins un terminal, indiquant que le au moins un terminal est situé dans l'aire d'activité du groupe de communication vocale, l'unité de serveur est agencée pour commander (324) le au moins un serveur commandant la communication vocale de groupe afin d'établir le groupe de communication vocale à base IP.

12. Un système de communication mobile selon la revendication 10 ou 11, **caractérisé en ce que** :
au moins un terminal appartenant au groupe de communication est agencé pour stocker, dans l'unité de serveur, les spécifications afférentes à la localisation du groupe de communication vocale, dans lesquelles l'aire d'activité du groupe de communication vocale est liée à l'emplacement d'un terminal appartenant au groupe.

13. Un système de communication mobile selon la revendication 10 ou 11, **caractérisé en ce que**:
au moins un terminal appartenant au groupe de communication est agencé pour stocker les spécifications liées à la localisation du groupe de communication vocale, qui déterminent une aire géographique prédéterminée, en tant qu'aire d'activité du groupe de communication vocale dans l'unité de serveur.

14. Un système de communication mobile selon l'une quelconque des revendications 10 à 13, **caractérisé en ce que** :
faire d'activité est agencée pour être déterminée en tant qu'aire couvrant une ou plusieurs cellules d'un réseau mobile.

15. Un système de communication mobile selon l'une quelconque des revendications 10 à 14, **caractérisé en ce que** :
une unité de serveur de présence est agencée pour être fonctionnellement connectée au au moins un serveur commandant la communication vocale de groupe, de manière que
l'unité de serveur soit agencée pour stocker une condition basée sur l'information de présence pour au moins un membre du groupe de communication vocale, pour activer le membre pour participer au groupe de communication vocale à base IP.

16. Un système de communication mobile selon la revendication 15, **caractérisé en ce que**:
le au moins un serveur est agencé pour transmettre aux membres du groupe de communication vocale de l'information sur l'activation d'autres membres du groupe pour le groupe de communication vocale à base IP, en tant qu'information de présence présentée sur les affichages de terminaux.

17. Un système de communication mobile selon l'une quelconque des revendications 10 à 16, **caractérisé en ce que** :
le système mobile comprend une interface avec l'information de localisation des abonnés d'un autre opérateur de réseau.

18. Une unité de serveur (AOR) pour un système mobile comprenant une pluralité de terminaux (UT1, UT2) ainsi qu'au moins un réseau à accès sans fil (RAN) et un réseau à paquets de données (GPRS) lui étant connecté pour la transmission de paquets de données (IP) entre des terminaux (UT1, UT2), et au moins un serveur (PoC) commandant la communication vocale de groupe, **caractérisée en ce que**
l'unité de serveur (ASR) est fonctionnellement susceptible d'être connectée au au moins un serveur (PoC) commandant la communication vocale de groupe, et l'unité de serveur est agencée en connexion avec la communication vocale de groupe à base IP,
pour stocker, pour le groupe de communication vocale à établir, des spécifications liées à la localisation comprenant une distance maximale prédéterminée depuis un point de référence, fixée entre les membres du groupe ; et
pour commander l'établissement d'un groupe de communication vocale à base IP entre au moins deux des terminaux (UT1, UT2, UT3), de manière que l'activation des membres du groupe demande la localisation dans l'aire d'activité déterminée par la distance maximale, dans lequel, en réponse à l'information de localisation d'au moins un terminal (UT2, UT3) déterminé dans une requête d'établissement émanant d'un premier terminal, pour une communication vocale de groupe à base IP indiquant que le au moins un terminal (UT2, UT3) est localisé dans l'aire d'activité du groupe de communication vocale, l'unité de serveur (ASR) est agencée pour commander (324) l'établissement du groupe de communication vocale à base IP (326 à 330) entre le premier terminal (UT1) et le au moins un terminal (UT2, UT3).

19. Une unité de serveur (ASR) selon la revendication 18, **caractérisée en ce que** :
en réponse à la requête d'établissement pour une communication vocale de groupe à base IP, transmise (302) par le premier terminal du groupe de communication au au moins un serveur commandant la communication vocale de groupe, l'unité de serveur est agencée pour contrôler (320) les spécifications afférentes à la localisation du groupe de communication vocale, qui comprennent l'aire d'activité du groupe de communication vocale ;
l'unité de serveur est agencée pour contrôler (322) l'information de localisation du au moins un terminal déterminé dans la requête d'établissement pour la communication vocale de groupe ;
en réponse à l'information de localisation du au moins un terminal, indiquant que le au moins un terminal est localisé dans l'aire d'activité du groupe de communication vocale, l'unité de serveur est agencée pour commander (324) le au moins un serveur commandant la communication vocale de groupe, afin d'établir le groupe de communication vocale à base IP.

20. Une unité de serveur (ASR) selon la revendication 18 ou 19, **caractérisée en ce que**:
l'unité de serveur est agencée pour stocker les spécifications afférentes à la localisation du groupe de communication vocale, transmises par au moins un terminal appartenant au groupe de communication, spécifications dans lesquelles l'aire d'activité du groupe de communication vocale est liée à la localisation d'un terminal appartenant au groupe.

21. Une unité de serveur selon la revendication 18 ou 19, **caractérisée en ce que** :
l'unité de serveur est agencée pour stocker les spécifications afférentes à la localisation du groupe de communication vocale, transmises par au moins un terminal appartenant au groupe de communication, spécifications dans lesquelles l'aire d'activité du groupe de communication vocale est définie en tant qu'aire géographique prédéterminée.

22. Une unité de serveur (ASR) selon l'une quelconque des revendications 18 à 21, **caractérisée en ce que** :
une unité de serveur de présence est connectée fonctionnellement au au moins un serveur commandant la communication vocale de groupe, de manière que
l'unité de serveur soit agencée pour stocker une condition, basée sur l'information de présence pour au moins un membre du groupe de communication vocale, pour activer le membre pour participer au groupe de communication vocale à base IP.

23. Un produit de programme pour ordinateur, pour commander une unité de serveur (ASR) en connexion avec une communication vocale de groupe à base IP, l'unité de serveur étant adaptable à un système mobile comprenant plusieurs terminaux (UT1, UT2, UT3), ainsi qu'un réseau à accès sans fil (RAN) et un réseau à paquets de données (GPRS) lui étant connecté pour transmettre des paquets de données (IP) entre des terminaux et au moins un serveur (PoC) commandant la communication vocale de groupe, **caractérisé en ce que** le produit de programme pour ordinateur comprend :
un code de programme pour ordinateur pour connecter fonctionnellement l'unité de serveur (ASR) au au moins un serveur (PoC) commandant la communication vocale de groupe ;
un code de programme pour ordinateur pour stocker des spécifications afférentes à la localisation pour un groupe de communication vocale devant être établi, les spécifications comprenant une distance maximale prédéterminée depuis un point de référence, fixée entre les membres du groupe ; et
un code de programme pour ordinateur, pour commander l'établissement d'un groupe de communication vocale à base IP entre au moins deux des terminaux (UT1, UT2), de manière que l'activation des membres du groupe demande la localisation dans l'aire d'activité déterminée par la distance maximale, le code de programme pour ordinateur étant adapté pour commander (324) l'établissement du groupe de communication vocale à base IP (326 à 330) entre un premier terminal (UT1) et au moins un terminal (UT2, UT3) en réponse à une information de localisation d'au moins un terminal (UT2, UT3), déterminée lors d'une requête d'établissement émanant du premier terminal (UT1) pour une communication vocale de groupe à base IP, indiquant que le au moins un terminal (UT2, UT3) est situé dans l'aire d'activité du groupe de communication vocale.
